# EUROPEAN PATENT APPLICATION

(11) **EP 4 632 970 A1**
(43) Date of publication of application: **15.10.2025**
(21) Application number: 24169402.5
(22) Date of filing: 10.04.2024
(51) Int. Cl.: H01S 3/00, H01S 3/034, H01S 3/03, G01N 21/94, H01S 3/036, H01S 3/07, H01S 3/223

(54) **OPTICAL AMPLIFIER FOR AMPLIFYING LASER RADIATION, LITHOGRAPHY SYSTEM AND METHOD FOR AMPLIFYING LASER RADIATION IN AN OPTICAL AMPLIFIER**

(71) Applicant: TRUMPF Lasersystems for Semiconductor Manufacturing SE, 71254 Ditzingen (DE); ASML Netherlands B.V., 5504 DR Veldhoven (NL)
(72) Inventor: SCHWEIKERT, Sven, Ditzingen (DE); WIESWEG, Florian, Ditzingen (DE); DILISSEN, Ruben Hendrik C, Veldhoven (NL)
(74) Representative: Kutzenberger Wolff & Partner

(57) **Abstract**

The present invention concerns an optical amplifier (2) for amplifying laser radiation (11) comprising a cavity (201) filled with a laser active gas, comprising a screen (205) having a surface arranged in the cavity (201), a camera (207) configured for monitoring the surface of the screen (205) and for providing image data, and an analysis unit (208) configured for detecting particles (300) deposited on the surface of the screen (205) based on the image data provided by the camera (207. The invention further concerns a for monitoring particle contamination in an optical amplifier (2) for amplifying laser radiation (11) comprising a cavity (201) filled with a laser active gas and a screen (205) having a surface arranged in the cavity (201), wherein a camera (207) monitors the surface of the screen (205) and provides image data and an analysis unit (208) detects particles (300) deposited on the surface of the screen (205) based on the image data provided by the camera (205).

## Description

The invention concerns an optical amplifier for amplifying laser radiation of the type comprising a cavity filled with a laser active gas, in other words, a gaseous laser active medium. The invention further concerns a lithography system, in particular an extreme ultraviolet lithography system. The invention further concerns a method for monitoring particle contamination in an optical amplifier for amplifying laser radiation comprising a cavity filled with a laser active gas.

The invention can be applied in the field of drive laser systems for use in extreme ultraviolet (EUV) lithography. Those drive laser systems typically include a laser source for generating pulsed laser radiation and several optical amplifiers for amplifying the pulsed laser radiation. Generally, the optical amplifiers include cavities that are filled with a laser gas, e.g., a mixture comprising CO₂, N₂ and He. The laser gas may be excited by radio-frequency (RF) signals applied to the laser gas using electrodes.

Optical components, e.g., mirrors are employed to guide the laser radiation from one cavity to the other. Those optical components are, however, sensitive for particle contamination. Contamination can occur when the system is opened, e.g., for maintenance but also during normal operation of the drive laser. As contamination is likely during maintenance of the system, a cleaning run is typically performed thereafter, wherein the one or more cavities of the optical amplifier are flushed with laser gas. To ensure that no contamination is present, those cleaning runs are typically performed for long duration, e.g., over a duration of 6 to 48 hours. Those cleaning runs drastically compromise system availability.

Against this background, the problem underlying the invention is to increase availability of optical amplifiers comprising a cavity filled with a laser active gas.

According to an aspect of the **invention**, an optical amplifier for amplifying laser radiation is provided, the optical amplifier comprising a cavity filled with a laser active gas, a screen having a surface arranged in the cavity, a camera configured for monitoring the surface of the screen and for providing image data, and an analysis unit configured for detecting particles deposited on the surface of the screen based on the image data provided by the camera.

In the inventive optical amplifier, particle contamination within the cavity can by automatically detected and quantified by the analysis unit based on the video data. The video camera and the analysis unit allow to reliably detect the current state of contamination in the cavity. If used during a cleaning run, the cleaning run can be stopped as soon as a sufficient grade of cleanliness is achieved thereby increasing system availability. In normal operation, the video camera and the analysis unit enable predictive maintenance. Dependent on the detected degree of contamination, appropriate cleaning or other maintenance routine can be scheduled before severe damage occurs to the system. Thereby, system downtimes can be reduced.

Preferably, the camera is a digital camera and the image data is provided to the analysis unit as digital image data. The camera is preferably a video camera, that means it is configured for recording moving images. Alternatively, the camera is a still camera, that means it is configured for recording still images.

According to a preferred embodiment of the invention, the surface of the screen is coated with a grease suited for trapping particles. The grease may hinder the particles from leaving the surface of the screen, so that the particles can properly be recorded by the video camera and detected by the analysis unit. Further to the above, the contamination within the gaseous atmosphere of inside the cavity is reduced. The grease is preferably a vacuum grease, in other words, a grease with low volatility to be used in low pressure environments. The grease may alternatively or additionally qualify as a high temperature grease, in other words, a grease suitable for application in environments having a temperature from -30°C to 260 °C.

According to a preferred embodiment of the invention, the surface of the screen has an arithmetic surface roughness, Ra, which is greater than 10 microns, preferably greater than 100 microns. Ra is considered to be the arithmetic average value of a roughness profile determined from deviations about a center line within an evaluation length. A surface roughness in this range has been proved to facilitate capturing particles and hindering them from leaving the screen. According to a preferred embodiment of the invention, the screen is at least partially transparent and the camera is arranged so as to monitor the surface of the screen through an at least semi-transparent core material of the screen. This embodiment has the advantage that the surface of the screen can be monitored without the need to arrange the camera in front of the surface of the screen, the region from where the particles are expected to arrive at the surface. Thus, unwanted shielding of the surface by the camera can be avoided.

According to a preferred embodiment of the invention, the camera is arranged outside the cavity. This comes with the advantage that the video camera is not required to withstand the harsh conditions inside the cavity, e.g., elevated temperatures and plasma exposure.

According to a preferred embodiment of the invention, the analysis unit is configured to determine a number of particles deposited and/or a rate of deposited particles per unit of time. The analysis unit may be configured as an image analysis unit. For example, the analysis unit may be configured to carry out one or more image analysis algorithms to detect objects within the image data and to classify objects as particles. The analysis unit may include a counter configured for counting the number of detected particles. The analysis unit may alternatively or further include a timer to measure a unit of time so as to determine the number of detected particles per unit of time. Preferably, the analysis unit is configured to separately determine a number of particles deposited and/or a rate of deposited particles per unit of time for multiple zones of the surface of the screen. This embodiment allows distinguishing the contamination distribution for different zones of the screen. For example, the screen may comprise N zones, wherein N is an integer number greater than 1 and the analysis unit may include N counters, each counter being configured for counting the number of detected particles within one of the N zones. The analysis unit may alternatively or further include N timers, each timer being configured to measure a unit of time so as to determine the number of detected particles per unit of time within one of the N zones.

According to a preferred embodiment of the invention, the optical amplifier comprises a light source configured to illuminate the surface of the screen. By illuminating the surface of the screen detection performance provided by the combination of the camera and the analysis unit may be improved. The light source is preferably arranged so to illuminate the surface of the screen from its front face. Alternatively, the light source may be arranged so as to illuminate the surface of the screen through an a least semi-transparent core material of the screen. The light source preferably is configured to emit light having a wavelength different than the wavelength of the light emitted from the excited laser gas.

According to a preferred embodiment of the invention, the optical amplifier comprises an optical filter arranged between the surface and the camera and configured for blocking light emitted by the laser active gas when being excited. The filter improves camera performance when laser active gas is excited and, thus, emits light. Thereby, particle detection can be carried out during normal operation of the optical amplifier.

According to another aspect of the **invention,** a lithography system, in particular an extreme ultraviolet lithography system, is provided, comprising a drive laser with an optical amplifier as disclosed before.

According to yet another aspect of the **invention**, a method for monitoring particle contamination in an optical amplifier for amplifying laser radiation is provided, the method comprising a cavity filled with a laser active gas and a screen having a surface arranged in the cavity, wherein a camera monitors the surface of the screen and provides image data and an analysis unit detects particles deposited on the surface of the screen based on the image data provided by the camera.

The method may provide the same technical benefits and advantages as the inventive optical amplifier. Thus, reference is made to the respective description relating to the inventive optical amplifier.

According to a preferred embodiment of the invention, the surface of the screen is coated with a grease suited for trapping particles. As mentioned before, the application of grease may hinder the particles from leaving the surface of the screen, so that the particles can properly be recorded by the video camera and detected by the analysis unit. Further to the above, the contamination within the gaseous atmosphere of inside the cavity is reduced. The grease is preferably a vacuum grease. The grease may alternatively or additionally qualify as a high temperature grease.

According to a preferred embodiment of the invention, the camera monitors the surface of the screen in an operation mode in which the optical amplifier amplifies laser radiation. By monitoring the screen in normal operation of the optical amplifier, service activities can be scheduled if contamination is detected, e.g., if contamination above a predetermined maximum value is detected.

According to a preferred embodiment of the invention, an optical deflector mirror of the optical amplifier is removed and the screen is arranged as part of the optical amplifier at the place of the deflector mirror before the camera monitors the surface of the screen. This embodiment of the inventive method is well suited for shortening cleaning runs. The deflector mirror of the optical amplifier may be exchanged so as to avoid damage to the deflector mirror and allow monitoring through the at least semi-transparent material of the screen. By this, the contamination can be monitored at a crucial position of the amplifier, the position of the deflector mirror.

According to a preferred embodiment of the invention, the analysis unit determines a number of particles deposited. Preferably the analysis unit includes a counter that is increased for each particle detected on the surface of the screen.

According to a preferred embodiment of the invention, the analysis unit determines a rate of deposited particles per unit of time. The rate of deposited particles per unit of time is a suitable parameter to consider in order to evaluate the current particle contamination in the cavity. Typically, lower rates of particles deposited per unit time indicate that the particle contamination inside the cavity is lower than in a scenario where a higher rate of particles deposited per unit time is detected. Optionally a control signal is generated and/or monitoring the surface is stopped when the rate falls below a predetermined minimum rate value. For example, a cleaning run can be stopped as soon as such control signal is generated because the particle contamination is considered to be sufficiently low.

According to a preferred embodiment of the invention, the analysis unit determines a rate of deposited particles per unit of time, wherein a warning signal is generated and/or an emergency shutdown is initiated when the rate rises above a predetermined maximum rate value. As explained before, the rate of deposited particles per unit of time is a suitable parameter to consider in order to evaluate the current particle contamination in the cavity. In normal operation, the particle contamination should not rise above a critical condition value, here he predetermined maximum rate. Thereby, damages to the system can be avoided and maintenance can be pro-actively scheduled.

Alternatively, or additionally, the advantageous embodiments and features disclosed in combination with the inventive optical amplifier can, alone or in combination, be applied to the inventive method.

Further details and advantages of the invention will be elucidated in the following using the embodiment shown in the figure.
- Fig. 1: depicts a block diagram of an embodiment of an extreme ultraviolet lithography system according to the invention;
- Fig. 2: depicts a schematic representation of an optical amplifier of the lithography system shown in Fig. 1; and
- Fig. 3: spectral characteristics of the laser gas plasma, the light emitted by the light source and the optical filter of the optical amplifier according to Fig. 2.

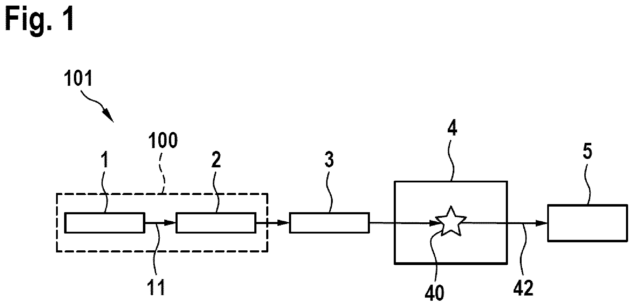

The embodiment in **Fig. 1** shows an extreme ultraviolet, EUV, lithography system 101 with a device 2 for amplifying laser radiation 11 according to an embodiment example of the invention. The EUV lithography system 101 comprises at least one radiation source 1, by means of which, in particular pulsed, laser radiation 11 can be generated. Even if only one radiation source 1 is shown here, two radiation sources 1 can be provided, for example to generate pre-pulses and main pulses of the laser radiation 11, which each follow one another in short succession and are focussed on a target area 40.

A further component of the EUV lithography system 101 is an optical amplifier 2 for amplifying laser radiation, by means of which the laser radiation 11 generated by the radiation source 1 is optically amplified. Both, the radiation source 1 and the optical amplifier 2 can together be understood to form a drive laser 100. The amplified laser radiation 11 is then fed to a focussing device 3, which focusses the laser radiation 11 onto a target area 40. A target material is arranged in the target area, which emits EUV radiation when irradiated with the laser radiation. According to the exemplary embodiment, the target area 40 is arranged in a target chamber 4 in which vacuum conditions prevail. The target material can be tin, for example, which is provided in drop form. The tin droplet can be heated by a pre-pulse, for example pulsed laser radiation 11 with a wavelength of 10.2 micron, so that the tin droplet is expanded, vaporised, ionised and/or a weak or possibly strong plasma is generated. A main pulse briefly following the pre-pulse, for example pulsed laser radiation 11 with a wavelength of 10.6 micron, can transfer the essential part of the material influenced by the pre-pulse into the plasma state, whereby the EUV radiation 42 is generated. This EUV radiation 42 is then fed to an exposure device 5 of the lithography system 101, in which the EUV radiation 42 can be used to expose semiconductor substrates.

According to a variation of the embodiment shown in Fig. 1, the pre-pulse and the main pulse are generated by two separate drive lasers. According to this variation, the laser radiation of the pre-pulse is pulsed laser radiation with a wavelength of 1 micron. Said 1 micron laser radiation is coupled to the focussing unit 3 so as to feed the 1 micron laser radiation into the focussing unit 3.

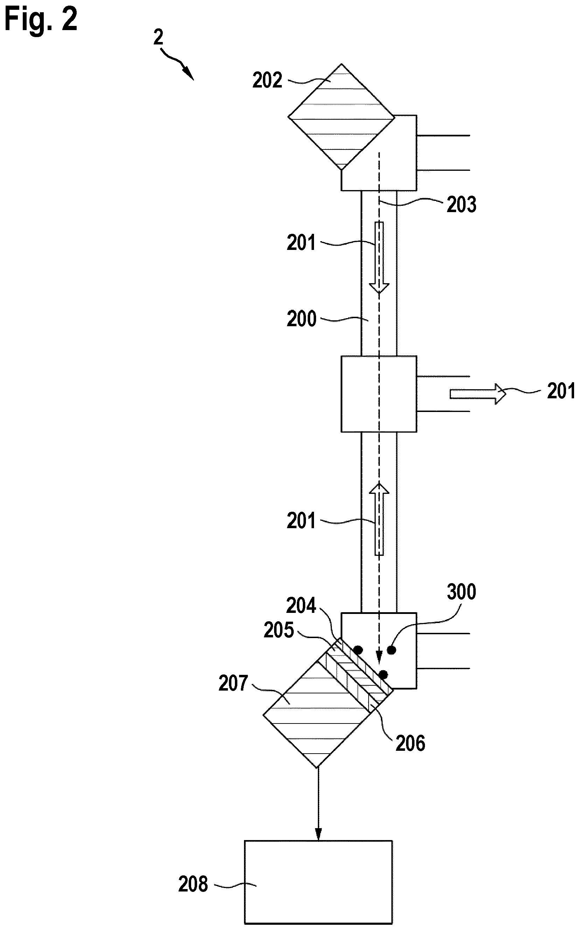

**Fig. 2** shows a part of an optical amplifier 2 that can be used in the lithography system 101 described with reference to Fig. 1 for amplifying laser radiation 11 generated by the radiation source 1. The optical amplifier 2 comprises a cavity 200 filled with a laser active gas. The laser gas preferably comprises CO₂ and N₂ and He. In order to prevent overheating, the laser gas is circulated in a cooling loop which preferably comprises a compressor and a laser gas cooler. In Fig. 2, the flow direction of the laser gas is indicated by arrows 201. Typically, optical components, like mirrors and windows are located at specific positions inside the cavity 200, e.g., in the block depicted at the top and the bottom in Fig. 2. In normal operation, those optical components serve to guide the laser radiation 11 through the optical amplifier 2 towards the downstream focussing device 3.

In order to enhance the availability of the optical amplifier 2, the optical amplifier 2 according to the embodiment of the invention comprises means for automatically monitoring particle contamination in the cavity. Those means include a screen 205 having a surface arranged in the cavity 200, a camera 207 configured for monitoring the surface of the screen 205 and for providing image data, and an analysis unit 208 configured for detecting particles 300 deposited on the surface of the screen 205 based on the image data provided by the camera 207. The screen is coated with a grease 204 suited for trapping particles 300, e.g., a vacuum grease. The material of the screen 205 is an at least partially transparent material so that the camera 207 is able to monitor the surface of the screen 205 inside the cavity 200 from a position outside the cavity 200. The screen may have an arithmetic surface roughness, Ra, which is greater than 10 microns, preferably greater than 100 microns.

According to the embodiment, the optical amplifier 2 further includes a light source 202 configured to illuminate the surface of the screen 205. Thereby, the influence of noise on the detection performance of the camera 207 is reduced.

The camera 207 is implemented as a digital camera, in particular a digital video camera, which provides digital image data to the analysis unit 208. The analysis unit is connected to the camera 207 via appropriate data lines and receives the image data provides by the camera 207. The analysis unit 208 is configured to apply certain image analysis algorithms to the provided image data in order to detect objects and classify them as particles. The analysis unit 208 is further able to determine a number of particles 300 deposited on the screen, e.g., by counting the detected particles, in particular the detected objects classified as particles. The analysis unit 208 is further configured to calculate a rate of deposited particles 300 per unit of time. Preferably, the analysis unit 208 is configured to separately determine a number of particles deposited and/or a rate of deposited particles per unit of time for multiple zones of the surface of the screen.

In order to enhance imaging performance, an optical filter 206 is arranged between the screen 205, in particular the surface of the screen 205, and the camera 207. The optical filter 206 is configured for blocking light emitted by the laser active gas when being excited, thus, the laser gas plasma. In contrast, the optical filter 206 is designed transparent for the light emitted by the light source 202.

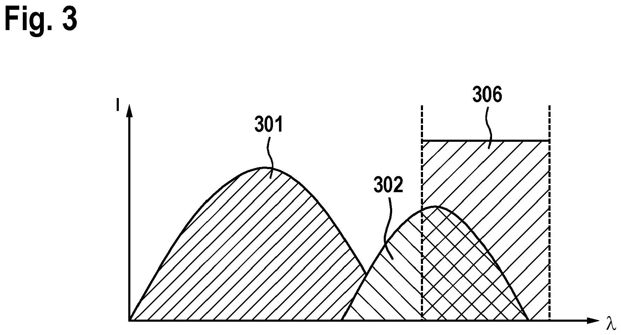

Fig. 3 depicts spectral characteristics of the laser gas plasma 301, the light 302 emitted by the light source 202 and the optical filter 206 of the optical amplifier 2 according to Fig. 2. As shown, the spectrum 301 of the laser gas plasma lies outside the transmission band 306 of the optical filter 206, whereas the spectrum of the light emitted by the light source 202 overlaps with the transmission band 306. Thus, the light emitted by the laser gas plasma is attenuated to avoid disturbances of the camera 207 by laser gas plasma light.

In the optical amplifier 2 according to the embodiment described above, the combination of the camera and the analysis unit may serve to shorten clean up runs as compared to conventional optical amplifiers 2 without such elements. After maintenance of the optical amplifier 2, e.g., after repairing some internal component of the optical amplifier 2, the clean up run is required to remove particle contamination from the cavity 201. Before starting the cleanup run, an optical deflector mirror of the optical amplifier 2 is removed and the screen 205 is arranged as part of the optical amplifier 2 at the place of the deflector mirror. Also, the light source 202 is arranged at a place of another optical deflector mirror. Then, the cavity 201 is flushed with laser gas while the camera 207 monitors the surface of the screen 205. The analysis unit 208 receives image data from the camera 207 and determines a rate of deposited particles 300 per unit of time. At the very beginning of the cleanup run, the rate is comparably high and drops with increasing duration. The analysis unit 208 constantly monitors the rate and checks whether the rate falls below a predetermined minimum rate value. If such drop below the predetermined minimum rate occurs, a control signal is generated in order to either automatically stop the cleanup run or indicate to a user of the optical amplifier 2 or the EUV lithography system 101 that the cleanup run may be manually stopped.

According to a variant of the embodiment shown in the figures, the light source 202 and the camera 207 are not arranged at the position of a deflector but at another position, such that arranging the light source 202 and the camera 207 does not require removing the deflector mirrors from the optical amplifier 2. This variant allows for carrying out the particle detection in normal operation of the optical amplifier 2. In other words, the camera 207 monitors the surface of the screen 205 in normal operation. Thereby, service activities can be scheduled if contamination is detected, e.g., if contamination above a predetermined maximum value is detected. For example, the analysis unit 208 determines a rate of deposited particles 300 per unit of time and a warning signal is generated when the rate rises above below a predetermined maximum rate value. Alternatively, or additionally an emergency shutdown can be automatically initiated when the rate rises above the predetermined maximum rate value in order to avoid damages to the system due to high particle contamination.

The optical amplifier 2 according to the exemplary embodiment explained before has increased availability.

### Reference Signs:

- 1: laser radiation source
- 2: optical amplifier
- 3: focussing device
- 4: target chamber
- 5: exposure device
- 11: laser radiation
- 40: target area
- 42: EUV radiation

- 100: drive laser
- 101: EUV system

- 200: cavity
- 201: laser gas flow
- 202: light source
- 203: light
- 204: grease
- 205: screen
- 206: filter
- 207: camera
- 208: analysis unit
- 300: particle
- 301: spectrum of laser gas plasma
- 302: spectrum of light source
- 302: transmission band of optical filter
- I: light intensity
- λ: wavelength

## Claims

1. Optical amplifier (2) for amplifying laser radiation (11) comprising a cavity (201) filled with a laser active gas,
**characterized by** a screen (205) having a surface arranged in the cavity (201), a camera (207) configured for monitoring the surface of the screen (205) and for providing image data, and an analysis unit (208) configured for detecting particles (300) deposited on the surface of the screen (205) based on the image data provided by the camera (207).

2. Optical amplifier (2) according to claim 1, **characterized in that** the surface of the screen (205) is coated with a grease (204) suited for trapping particles (300).

3. Optical amplifier (2) according to any of the preceding claims, **characterized in that** the screen (205) is at least partially transparent and that the camera (207) is arranged so as to monitor the surface of the screen (205) through an at least semi-transparent core material of the screen (205).

4. Optical amplifier (2) according to any of the preceding claims, **characterized in that** the camera (207) is arranged outside the cavity (201).

5. Optical amplifier (2) according to any of the preceding claims, **characterized in that** the analysis unit (208) is configured to determine a number of particles (300) deposited and/or a rate of deposited particles (300) per unit of time.

6. Optical amplifier (2) according to any of the preceding claims, **characterized by** a light source (202) configured to illuminate the surface of the screen (205).

7. Optical amplifier (2) according to any of the preceding claims, **characterized by** an optical filter (206) arranged between the surface and the camera (207) and configured for blocking light emitted by the laser active gas when being excited.

8. Lithography system (101), in particular extreme ultraviolet lithography system, comprising a drive laser (100) with an optical amplifier (2) according to any of the preceding claims.

9. Method for monitoring particle contamination in an optical amplifier (2) for amplifying laser radiation (11) comprising a cavity (201) filled with a laser active gas and a screen (205) having a surface arranged in the cavity (201), wherein a camera (207) monitors the surface of the screen (205) and provides image data and an analysis unit (208) detects particles (300) deposited on the surface of the screen (205) based on the image data provided by the camera (205).

10. Method according to claim 9, **characterized in that** the surface of the screen (205) is coated with a grease (204) suited for trapping particles (300).

11. Method according to any of claims 9 or 10, **characterized in that** the camera (207) monitors the surface of the screen (205) in an operation mode in which the optical amplifier (2) amplifies laser radiation.

12. Method according to any of claims 9 or 10, **characterized in that** an optical deflector mirror of the optical amplifier (2) is removed and the screen (205) is arranged as part of the optical amplifier (2) at the place of the deflector mirror before the camera (207) monitors the surface of the screen (205).

13. Method according to any of claims 9 to 12, **characterized in that** the analysis unit (208) determines a number of particles (300) deposited.

14. Method according to any of claims 9 to 13, **characterized in that** the analysis unit (208) determines a rate of deposited particles (300) per unit of time, optionally wherein a control signal is generated and/or monitoring the surface is stopped when the rate falls below a predetermined minimum rate value.

15. Method according to any of claims 9 to 14, **characterized in that** the analysis unit (208) determines a rate of deposited particles (300) per unit of time, wherein a warning signal is generated and/or an emergency shutdown is initiated when the rate rises above a predetermined maximum rate value.
